# FASCICULE DE BREVET EUROPEEN

(11) **EP 4 256 946 B1**
(45) Date de publication et mention de la délivrance du brevet: **30.09.2026**
(21) Numéro de dépôt: 23166848.4
(22) Date de dépôt: 05.04.2023
(51) Int. Cl.: A01D 89/00

(54) **DISPOSITIF DE RAMASSAGE D'ANDAINS DE TIGES VÉGÉTALES AYANT UNE ROUE DE RAMASSAGE À DOIGTS FIXES**
VORRICHTUNG ZUM AUFNEHMEN VON SCHWADEN VON PFLANZENSTÄNGELN MIT EINEM AUFNAHMERAD MIT FESTEN FINGERN
PLANT STALK WINDROW PICK-UP DEVICE WITH FIXED FINGER PICK-UP WHEEL

(30) Priorité: 05.04.2022 FR 2203087
(43) Date de publication de la demande: 11.10.2023
(73) Titulaire: N.V. Depoortere, 8791 Beveren-Leie (BE)
(72) Inventeur: DEPOORTERE, Rik, 8908 VLAMERTINGE (BE)
(74) Mandataire: Cabinet Beau de Loménie

(56) Documents cités:
- EP-B1- 1 864 567
- EP-B1- 3 187 036
- US-A1- 2014 174 051
- US-A1- 2022 061 220
- US-B1- 8 181 435
- US-B2- 8 893 463

## Description

### Domaine technique

L'invention concerne le domaine du ramassage de fibres végétales disposées sur le sol, notamment sous forme de bandes ou d'andains de tiges végétales. Un exemple d'utilisation non limitatif est le ramassage d'andains de tiges de lin ou de chanvre lors des opérations de retournage ou d'enroulage.

L'invention porte plus particulièrement sur un dispositif de ramassage pour ces opérations de retournage ou d'enroulage.

### Technique antérieure

Traditionnellement, une machine de ramassage d'andains de tiges végétales, telle une enrouleuse ou une retourneuse, est munie d'un dispositif de ramassage pour prélever des andains de tiges végétales déposées au sol.

Le dispositif de ramassage, généralement dénommé « pick-up », comporte des doigts de ramassage rotatifs. Le dispositif de ramassage, généralement disposé à l'avant de la machine, est agencé pour être positionné à proximité du sol. Les doigts de ramassage ont pour fonction de ramasser les tiges et de les amener vers un organe de convoyage, telle qu'une courroie à picots, dont la fonction est d'amener les tiges vers un module de retournage ou d'enroulage.

On comprend que les doigts de ramassage font saillie hors de l'organe extérieur lorsqu'ils sont déployés.

Plus précisément, lors de la rotation des doigts de ramassage, chacun des doigts est progressivement déployé jusqu'à une position de déploiement maximale, puis est rétracté jusqu'à une position rétractée maximale dans laquelle le doigt est escamoté dans l'organe extérieur.

Pour assurer un ramassage efficace des tiges et assurer le transfert des tiges ramassées vers l'organe de convoyage, le dispositif de ramassage est généralement agencé de sorte que les doigts sont déployés sensiblement au maximum lorsqu'ils s'étendent sensiblement verticalement vers le sol, et sont totalement ou quasiment rétractés à l'endroit où les tiges sont récupérées par l'organe de convoyage, le plus souvent en position supérieure du dispositif ramassage.

Traditionnellement, ce mouvement de déploiement et de rétraction des doigts est obtenu par le fait que les doigts sont montés pivotant sur un corps qui est disposé de façon excentrique par rapport à l'axe de l'organe extérieur. La distance entre l'axe de pivotement et un orifice donné de l'organe extérieur varie pendant le déplacement selon une trajectoire circulaire de l'orifice, en conséquence de quoi le doigt se déplace en translation par rapport à l'orifice pendant la rotation de l'organe extérieur.

On comprend donc qu'il existe un mouvement de translation relatif entre chaque doigt et l'organe extérieur lors de la rotation de la roue de ramassage.

Généralement, les doigts et l'organe extérieur sont en métal. Pour éviter que les doigts viennent en contact avec l'organe extérieur, ce qui aurait pour effet d'endommager l'organe extérieur, il est connu de placer des pièces d'usure, par exemple en plastique ou en nylon, dans les orifices périphériques. Ces pièces d'usure comportent des trous dans lesquels coulissent les doigts.

Ce type de dispositif de ramassage, s'il donne généralement toute satisfaction, présente toutefois un agencement relativement complexe et exige une maintenance périodique et chronophage consistant notamment à démonter le pick-up pour changer les pièces d'usure. De plus, ce type de dispositif de ramassage est généralement bruyant en raison du mouvement relatif des doigts par rapport au corps et aux pièces d'usure.

On connait également des dispositifs de ramassage à doigts qui sont également mobiles par rapport à un moyeu central, tel que celui décrit dans US8181435. Ce type de dispositif n'est toutefois pas adapté au ramassage d'andains de lin ou chanvre.

### Exposé de l'invention

Un but de l'invention est de proposer dispositif de ramassage d'andains de tiges végétales remédiant aux inconvénients précités, présentant un agencement plus simple et moins couteux à fabriquer et à entretenir que les dispositifs de ramassage d'andains habituellement utilisés.

L'invention atteint son but par un dispositif de ramassage pour prélever des andains de tiges végétales déposées au sol, ledit dispositif de ramassage comportant :
- au moins une première roue de ramassage ayant un axe de rotation, la première roue de ramassage comportant une partie centrale et des doigts de ramassage qui sont fixes par rapport à la partie centrale et qui s'étendent depuis la partie centrale ;
- au moins un premier carter dans lequel est disposée la première roue de ramassage, la première roue de ramassage étant rotative par rapport au premier carter, le premier carter comprenant une extrémité inférieure, un bord supérieur et un bord inférieur,
- dans lequel la distance entre l'axe de rotation et le bord supérieur est supérieure ou égale au rayon de la première roue de ramassage, tandis que la distance entre l'axe de rotation et l'extrémité inférieure est inférieure au rayon de la roue de ramassage de sorte que certains des doigts de ramassage font saillie au-delà du bord inférieur du premier carter pour prélever les andains, tandis que certains des doigts de ramassage situés au-dessus d'un plan horizontal passant par l'axe de rotation sont escamotés dans le premier carter en dessous du bord supérieur.

Aussi, contrairement au dispositif de ramassage de l'art antérieur, les doigts de ramassage du dispositif selon l'invention sont fixes et ne sont pas montés pivotant sur un corps rotatif qui est excentré par rapport à un organe extérieur. Par fixe, on entend que les doigts sont immobiles, notamment en rotation, par rapport à la partie centrale de la première roue de ramassage. Par « escamoté dans le premier carter », on entend que certains doigts situés au-dessus du plan horizontal se trouvent entièrement dans le premier carter en dessous du bord supérieur.

La roue de ramassage du dispositif selon l'invention est plus simple et plus robuste que celle de l'art antérieur dès lors qu'elle est constituée d'une partie centrale d'où s'étendent radialement des doigts fixes par rapport à la partie centrale. De préférence, la partie centrale et les doigts forment une seule et même pièce.

Sans sortir du cadre de la présente invention, les extrémités libres des doigts peuvent être courbes de façon à réaliser un prélèvement doux des andains.

De préférence, le dispositif de ramassage comporte en outre un arbre d'entraînement pour entraîner la première roue de ramassage en rotation autour de l'axe de rotation.

Par ailleurs, le déplacement relatif des doigts de ramassage par rapport au premier carter est un mouvement de rotation et non pas un mouvement de translation comme dans la roue de ramassage de l'art antérieur décrit ci-dessus. Aussi, le dispositif de ramassage selon l'invention est avantageusement dépourvu des pièces d'usure du dispositif antérieur.

Le dispositif de ramassage selon l'invention est donc plus simple à fabriquer et à maintenir que celui de l'art antérieur.

On comprend que l'extrémité inférieure du premier carter est celle qui est la plus proche du sol en utilisation. Le bord inférieur du premier carter fait face au sol, tandis que le bord supérieur est opposé situé au-dessus de l'axe de rotation.

On comprend que le rayon, au sens de l'invention, correspond à la distance entre l'axe de rotation et l'extrémité distale d'un des doigts de ramassage.

Les extrémités distales des doigts qui se trouvent en dessous du plan horizontal, en utilisation c'est-à-dire lors du fonctionnement de la machine équipée du dispositif de ramassage, sont en dessous du bord inférieur pour aller prélever l'andain.

Par ailleurs, certains des doigts situés au-dessus du plan horizontal sont escamotés dans le premier carter. Cela signifie que les extrémités distales de ces doigts se trouvent en dessous du bord supérieur.

Un intérêt est que, par cet escamotage, les doigts de ramassage libèrent les andains qui sont dans le même temps pris en charge par une courroie de convoyage qui se trouve généralement immédiatement au-dessus du bord supérieur.

Avantageusement, le premier carter comporte une première et une deuxième portions qui sont disposées de part et d'autre de la première roue de ramassage, les première et deuxième portions délimitant un logement dans lequel la première roue de ramassage est disposée.

De préférence, les première et deuxième portions flanquent la première roue de ramassage.

Ces deux portions sont espacées axialement l'une de l'autre de façon à définir le logement dans lequel est engagée la première roue de ramassage. On comprend que la première roue de ramassage tourne dans ce logement par rapport au premier carter autour de l'axe de rotation.

Avantageusement, la distance axiale entre les première et deuxième portions est sensiblement égale à l'épaisseur de la roue de ramassage, de préférence, sensiblement égale à l'épaisseur de la portion centrale. Par épaisseur, on entend ici l'épaisseur axiale considérée selon l'axe de rotation.

Par ailleurs et de préférence, la partie centrale s'étend entre les deux portions de façon à empêcher la poussière de pénétrer à l'intérieur du premier carter.

Avantageusement, le premier carter comporte une ouverture circulaire perpendiculaire à l'axe de rotation.

De préférence, cette ouverture traverse axialement le premier carter. L'ouverture traverse donc les première et deuxième portions.

Selon un aspect particulièrement avantageux de l'invention, le diamètre de la partie centrale est supérieur au diamètre de l'ouverture circulaire. On comprend que la partie centrale obture le passage défini entre l'ouverture et le logement. Cela permet d'éviter que des fragments de tiges n'entrent à l'intérieur du premier carter dans le volume défini par l'ouverture, ce qui serait de nature à endommager la roue de ramassage ou entraver sa rotation.

Avantageusement, le premier carter comporte une partie avant qui s'étend entre l'extrémité inférieure du carter et le bord supérieur, la partie avant présentant une forme courbe conformée de sorte que la distance entre l'axe de rotation et la partie avant est une fonction croissante entre l'extrémité inférieure et le bord supérieur, et certains des doigts de ramassage font saillie au-delà de la partie avant.

On comprend que la partie avant constitue un bord de guidage pour les andains qui sont amenés vers le bord supérieur.

Avantageusement, le premier carter est conformé de sorte que lors de la rotation de la roue de ramassage, les doigts de ramassage s'escamotent dans le premier carter lors de leur déplacement entre l'extrémité inférieure et le bord supérieur. On comprend que les doigts de ramassage qui se déplacent de l'extrémité inférieure vers le bord supérieur s'escamotent progressivement à l'intérieur du premier carter lors de la rotation de la roue de ramassage.

Avantageusement, la première roue de ramassage est excentrée vers le bas par rapport au centre de la portion demi-circulaire de la partie avant, de sorte que les doigts de ramassage tendent à s'escamoter à l'intérieur du premier carter lors du déplacement des doigts de ramassage du bord inférieur vers le bord supérieur. Le doigt qui se situe au-dessus du plan passant par l'axe de rotation et qui s'étend verticalement a son extrémité distale située sous le bord supérieur, de sorte que ledit doigt est entièrement escamotée dans le premier carter.

Avantageusement, le dispositif de ramassage selon l'invention comprend en outre une deuxième roue de ramassage coopérant avec l'arbre d'entrainement, et un deuxième carter dans lequel est disposée la deuxième roue de ramassage.

De préférence, la deuxième roue de ramassage est identique, à tout le moins similaire, à la première roue de ramassage. De même, de préférence, le deuxième carter est identique, à tout le moins similaire, au premier carter.

Les première et deuxième roues de ramassage sont préférentiellement distantes axialement l'une de l'autre. Les première et deuxième roues de ramassage sont entrainées ensemble en rotation, de préférence par l'arbre d'entrainement. Les première et deuxième roues de ramassage sont préférentiellement coaxiales.

Sans sortir du cadre de la présente invention, le dispositif de ramassage selon l'invention peut comporter davantage de roues de ramassage.

Avantageusement, les premier et deuxième carters sont reliés l'un à l'autre par une virole, qui est préférentiellement coaxiale à l'axe de rotation.

La virole est un tube creux dont la section transversale présente la forme générale d'un anneau, de préférence circulaire.

Avantageusement, le deuxième carter comporte une ouverture traversée par l'arbre d'entrainement, et la virole débouche dans les ouvertures des premier et deuxième carters.

On comprend que la virole permet de relier fluidiquement les ouvertures des premier et deuxième carters, ce qui permet à l'air de circuler entre les premier et deuxième carters. Un intérêt sera décrit ci-dessous.

De préférence, la virole présente une paroi cylindrique ajourée. Encore de préférence, la paroi cylindrique est reliée à un dispositif de ventilation, par exemple un dispositif d'aspiration ou de soufflage, permettant d'évacuer la poussière de sol qui est générée lorsque les doigts de ramassage viennent au contact du sol pour prélever l'andain.

De préférence, la virole comporte alors un premier orifice relié au dispositif de ventilation, et au moins un deuxième orifice pour la circulation du flux d'air entre l'intérieur de la virole et l'extérieur de la roue de ramassage. On comprend que la poussière entre par le deuxième orifice lorsque le dispositif de ventilation est un dispositif d'aspiration.

De préférence, la partie centrale de la première roue de ramassage est ajourée de façon à présenter des trous qui débouchent dans la virole. Un intérêt est de permettre une circulation d'air aspiré ou soufflé au sein de l'ensemble du dispositif de ramassage notamment lorsqu'il comporte plusieurs roues de ramassage.

Avantageusement, le deuxième carter comprend une troisième et une quatrième portions disposées de part et d'autre de la deuxième roue de ramassage, la deuxième portion étant reliée à la troisième portion par la virole.

Les troisième et quatrième portions sont de préférence des flasques qui flanquent la deuxième roue de ramassage. La distance axiale entre les troisième et quatrième portions est sensiblement égale à l'épaisseur de la deuxième roue de ramassage.

De préférence, l'ensemble constitué de la deuxième portion, de la troisième portion et de la virole forme une seule et même pièce, ce qui facilite les opérations de maintenance.

Avantageusement, le bord supérieur s'étend selon un plan de guidage. Le plan de guidage est sensiblement horizontal. Il présente une longueur qui est supérieure au rayon de la première roue de ramassage, et de préférence inférieure au double du diamètre de la première roue de ramassage. Un intérêt est de fournir une longueur de guidage permettant un transfert progressif des andains entre les doigts de ramassage et la courroie de convoyage à picots qui se trouve généralement au-dessus et parallèle au bord supérieur.

L'invention porte en outre sur un module de ramassage d'andains comprenant un dispositif de ramassage selon l'invention, et au moins une courroie de convoyage d'andains qui est disposée au-dessus du bord supérieur du premier carter tout en s'étendant sensiblement parallèlement au bord supérieur du premier carter, le bord supérieur du premier carter formant une surface de guidage des andains entrainés par la courroie de convoyage.

L'invention porte enfin sur une machine de ramassage d'andains comportant un module de ramassage selon l'invention et un dispositif pour former des balles qui est disposé en aval de la courroie de convoyage d'andains.

### Description des dessins

L'invention sera mieux comprise à la lecture de la description qui suit de modes de réalisation de l'invention donnés à titre d'exemples non limitatifs, en référence aux dessins annexés, sur lesquels :
[Fig. **1**] La figure **1** est une vue de côté d'une enrouleuse munie d'un dispositif pour former des balles ;
[Fig. **2**] La figure **2** est une vue de côté d'un exemple de réalisation du dispositif de ramassage selon l'invention ;
[Fig. **3**] La figure **3** est une vue en perspective du dispositif de ramassage de la figure **2** **;**
[Fig. **4**] La figure **4** est une vue en coupe axiale du dispositif de ramassage de la figure **2** **;** et
[Fig. **5**] La figure **5** est une vue éclatée du dispositif de ramassage de la figure **3****.**

### Description détaillée

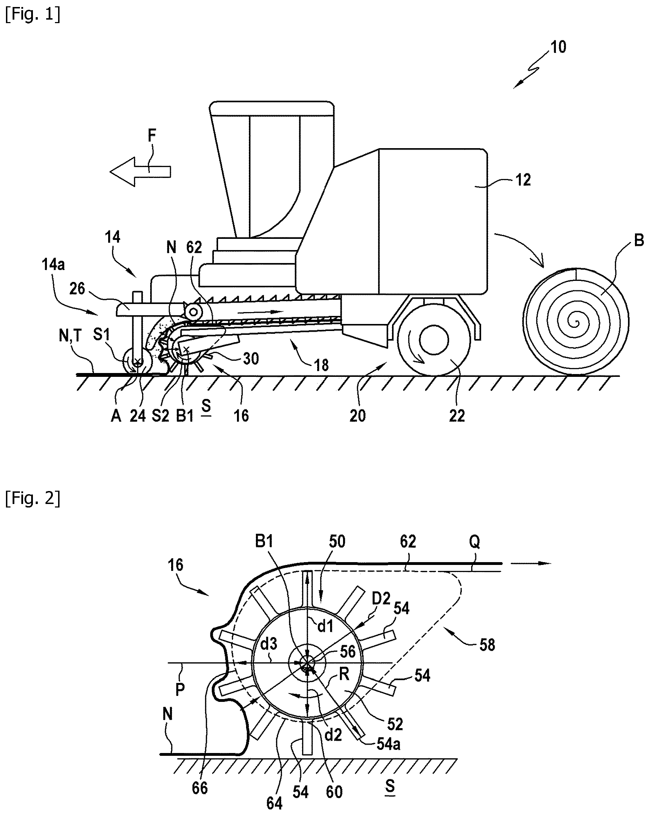

Sur la figure **1****,** on a illustré un exemple de réalisation d'une machine de ramassage **10** conforme à la présente invention. La machine de la figure **1** est une enrouleuse qui a pour fonction de ramasser les andains de tiges végétales qui reposent sur le sol **S** sous la forme d'une nappe, cette nappe étant ensuite enroulée sur elle-même grâce à un dispositif **12** de formation de balles **B.** Une fois les balles **B** formées, elles sont déposées sur le sol **S,** comme illustré en figure **1****.**

La machine de ramassage **10** comporte un module de ramassage **14** qui comporte un dispositif de ramassage **16** pour prélever les andains de tiges végétales déposées au sol, ainsi qu'une courroie de convoyage **18** disposée au-dessus du dispositif de ramassage et agencée pour amener les tiges végétales ramassées vers le dispositif de formation de balles **12.**

La machine de ramassage **10** d'andains de tiges végétales **T** comporte par ailleurs un dispositif de déplacement **20** pour déplacer la machine de ramassage sur le sol selon un sens d'avancement **F.** Le dispositif de déplacement **20** comporte de façon connue des roues **22** qui sont entraînées en rotation par un moteur (non illustré ici).

De façon connue, le module de ramassage **14** comporte une partie avant **14a** munie d'une roue de terrage **24** qui est agencée pour rouler sur le sol **S** selon un premier sens de rotation **S1** lorsque la machine se déplace selon le premier sens de déplacement **F.** La roue de terrage **24** est fixée à un châssis **26** du module de ramassage **14.** La roue de terrage **24** est réglable en hauteur par rapport au châssis **26,** de manière à ajuster la hauteur de la roue de ramassage du dispositif de ramassage **16** par rapport au sol **S.**

Considéré selon le sens d'avancement **F,** on constate que la roue de terrage **24** est disposée devant le dispositif de ramassage **16.** Le dispositif de ramassage **16** comporte un premier ensemble de doigts de ramassage **30** qui est rotatif selon un second sens de rotation **S2** opposé au premier sens de rotation **S1** de la roue de terrage **24.**

En se référant aux figures 2 à 5**,** on constate que le dispositif **16** de ramassage comporte une première roue **50** de ramassage ayant un axe de rotation **B1.** La première roue de ramassage **50** comporte une partie centrale **52** et des doigts de ramassage **54** qui sont fixes par rapport à la partie centrale **52** et qui s'étendent depuis la partie centrale, de préférence radialement. On comprend que l'extension radiale, au sens de l'invention, s'entend par rapport à l'axe de rotation **B1.** Les doigts de ramassage sont donc immobiles par rapport à la partie centrale.

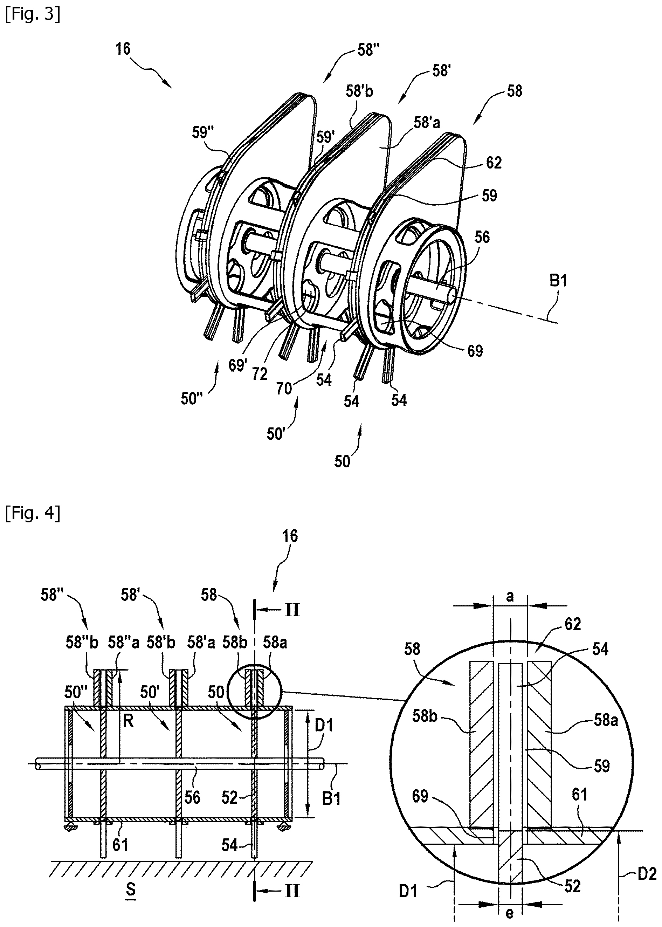

Dans cet exemple non exclusif, la première roue de ramassage **50** comporte dix doigts de ramassage **54** qui forment dans cet exemple une seule pièce avec la partie centrale **52.** Selon une variante, la première roue de ramassage peut aussi être en deux pièces pour simplifier la maintenance. Le dispositif **16** de ramassage comporte par ailleurs, dans cet exemple non limitatif, une deuxième roue de ramassage **50'** et une troisième roue de ramassage **50",** illustrées en figure **4****,** qui sont identiques à la première roue de ramassage **50.** Les première, deuxième et troisième roues de ramassage **50, 50', 50"** sont rotatives autour de l'axe de rotation **B1.**

Par ailleurs, le dispositif de ramassage comporte un arbre d'entraînement **56** pour entraîner les première, deuxième, troisième roues de ramassage en rotation autour de l'axe de rotation **B1.**

On comprend donc que l'arbre d'entraînement est fixé à chacun des première, deuxième et troisième roues de ramassage, de sorte que les première, deuxième et troisième roues de ramassage **50, 50', 50"** tournent dans le même sens à la même vitesse. L'arbre d'entraînement **56** coopère avec un dispositif d'entraînement relié à des moyens moteurs (non illustrés ici).

Comme on le constate notamment sur les figures **3** et **4****,** le dispositif **16** de ramassage comporte au moins un premier carter **58** dans lequel est logée la première roue de ramassage **50.** On comprend donc que la première roue de ramassage **50** est montée rotative par rapport au premier carter **58** autour de l'axe de rotation **B1.** Le premier carter comprend une extrémité inférieure **60,** un bord supérieur **62,** un bord inférieur **64.** Comme on le comprend à l'aide des figures **3** et **4****,** le dispositif **16** de ramassage comporte par ailleurs un deuxième carter **58'** dans lequel est logé la deuxième roue de ramassage **50',** et un troisième carter **58"** dans lequel est logée la troisième roue de ramassage **50".**

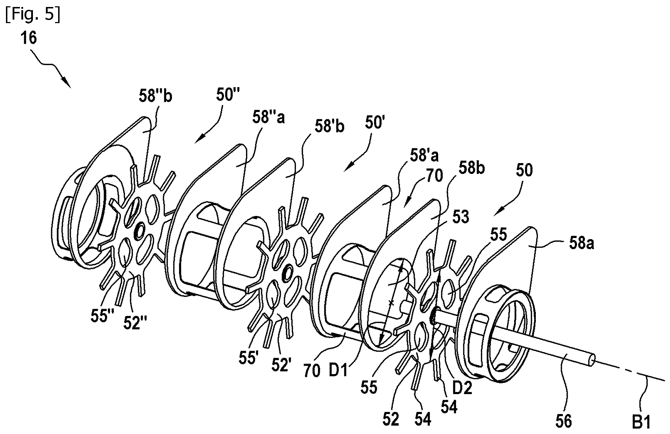

En référence aux figures **3** et **5****,** on constate que le premier carter **58** comporte des première et deuxième portions **58a, 58b,** qui sont disposées axialement de part et d'autre de la première roue de ramassage **50.** Les première et deuxième portions **58a, 58b** délimitent un logement **59** dans lequel la première roue de ramassage est disposée.

Le deuxième carter **58'** comporte quant à lui des troisième et quatrième portions **58'a** et **58'b** qui sont disposées de part et d'autre de la deuxième roue de ramassage, les troisième et quatrième portions délimitant un logement **59'** dans lequel la deuxième roue de ramassage est disposée.

Enfin, le troisième carter **58"** comporte des cinquième et sixième portions **58"a, 58"b** qui sont disposées de part et d'autre de la troisième roue de ramassage **50",** les cinquième et sixième portions délimitant un logement **59"** dans lequel la troisième roue de ramassage est disposée.

Dans cet exemple, les première et deuxième portions **58a** et **58b** constituent des flasques qui flanquent la première roue de ramassage. En se référant à nouveau à la figure **2****,** on constate que la distance **d1** entre l'axe de rotation **B1** et le bord supérieur est supérieure ou égale au rayon **R** de la première roue de ramassage. Le rayon **R** de la première roue de ramassage est vu comme étant la distance entre l'axe de rotation **B1** et l'extrémité distale **54a** des doigts.

Dans cet exemple, le bord supérieur présente une forme plane, sensiblement horizontale. On comprend donc que les doigts **54** de la première roue de ramassage ne font pas saillie au-delà du bord supérieur **62.** Autrement dit, les doigts de ramassage **54** sont escamotés à l'intérieur du premier carter lorsqu'ils s'étendent immédiatement en-dessous du bord supérieur **62.** Par ailleurs, la distance **d2** entre l'axe de rotation **B1** et l'extrémité inférieure **60** est inférieure au rayon **R** de la roue de ramassage de sorte que, en utilisation, les doigts de ramassage font saillie radialement au-delà et en-dessous du bord inférieur **64** du premier carter pour prélever les andains. Par ailleurs, certains des doigts de ramassage situés au-dessus d'un plan horizontal **P** passant par l'axe de rotation **B1** sont escamotés dans le premier carter entre les première et deuxième portions **58a, 58b.** Comme on le voit dans cet exemple, un doigt de ramassage situé au-dessus du plan horizontal **P** et qui s'étend sensiblement verticalement est entièrement escamoté, ou logé, dans le premier carter en dessous du bord supérieur, de façon à ne pas faire saillie au-delà du bord supérieur.

Dans l'exemple de la figure **2****,** les doigts de ramassage situés sous le plan horizontal **P** font saillie radialement au-delà du bord inférieur. On comprend, toujours en référence à la figure **2****,** que, en utilisation, les doigts de ramassage **54** sortent du premier carter lors de leur descente vers le sol, et qu'ils s'escamotent à l'intérieur du premier carter lors de leur remontée vers le bord supérieur **62.**

On comprend que le premier carter **58** est conformé de sorte que, lors de la rotation de la première roue de ramassage **50,** les doigts de ramassage **54** s'escamotent dans le premier carter lors de leur déplacement entre l'extrémité inférieure **60** et le bord supérieur **62.** En se référant à la figure **2****,** on constate que le premier carter **58** comporte également une partie avant **66** qui s'étend entre l'extrémité inférieure **60** du premier carter et le bord supérieur **62.** Dans cet exemple, la partie avant présente une forme circulaire, sensiblement demi-circulaire qui s'étend entre l'extrémité inférieure **60** et le bord supérieur **62** qui, dans cet exemple, présente une forme plane sensiblement horizontale.

On constate également que la première roue de ramassage **50** est excentrée vers le bas par rapport au centre de la portion demi-circulaire de la partie avant, de sorte que les doigts de ramassage **54** tendent à s'escamoter à l'intérieur du premier carter **58** lors du déplacement des doigts de ramassage du bord inférieur vers le bord supérieur. Plus généralement, la partie avant présente une forme courbe conformée de sorte que la distance entre l'axe de rotation et la partie avant ait une fonction croissante entre l'extrémité inférieure et le bord supérieur, et dans lequel certains doigts de ramassage font saillie au-delà de la partie avant. Le fait que la distance présente une fonction croissante permet l'escamotage progressif des doigts de ramassage **54** à l'intérieur du premier carter **58.**

En se référant à la vue de détail de la figure **4****,** on constate que la distance axiale **a** entre les première et deuxième portions **58a, 58b** est sensiblement égale à l'épaisseur axiale **e** de la roue de ramassage, de préférence sensiblement égale à l'épaisseur axiale e de la portion centrale. Dans cet exemple, non limitatif, l'épaisseur axiale de la portion centrale est égale à l'épaisseur axiale de la roue de ramassage, l'épaisseur axiale des doigts de ramassage étant sensiblement égale à l'épaisseur axiale de la portion centrale.

Comme on le constate sur la vue de détail de la figure **4****,** le diamètre **D1** de la partie centrale **52** est supérieur au diamètre **D1** de l'ouverture circulaire **53.** Le premier carter comporte une ouverture circulaire **59** qui est perpendiculaire à l'axe de rotation **B1.** Cette ouverture circulaire présente un diamètre **D1.** L'extension axiale de cette ouverture circulaire correspond sensiblement à la distance a entre les première et deuxième portions.

Comme on le comprend à l'aide du détail de la figure **4****,** le fait que le diamètre **D2** de la partie centrale **52** soit supérieur au diamètre **D1** de l'ouverture circulaire a pour effet que la partie centrale obture l'ouverture circulaire **59** de façon à empêcher les particules de tiges de rentrer à l'intérieur du premier carter. Dans l'exemple de la figure **4****,** le dispositif de ramassage comporte un tube cylindrique **61** ayant pour axe l'axe de rotation **B1,** tandis que les premier, deuxième et troisième carters sont constitués des portions **58a... 58"b** qui s'étendent autour du tube **61.** Sur les figures **3** et **5****,** on a illustré un autre mode de réalisation dans lequel les premier et deuxième carters **58, 58'** sont liés l'un à l'autre par une virole **70.** Cette virole **70** présente une forme sensiblement cylindrique ayant pour axe l'axe de rotation **B1** et présente une paroi cylindrique ajourée **72.** Comme on le constate sur la figure **5****,** le deuxième carter **58'** comporte une ouverture circulaire **69'.** La virole **70** débouche dans les ouvertures **69, 69'** des premier et deuxième carters. La virole est creuse, ce qui permet une circulation d'air à l'intérieur du dispositif de ramassage. Ceci présente un intérêt lorsque la virole est reliée à un dispositif de ventilation, par exemple un dispositif d'aspiration ; la virole étant alors munie de grilles permettant d'aspirer, à titre d'exemple, la poussière de sol qui est générée lorsque les doigts de ramassage viennent en contact du sol.

On constate par ailleurs que la partie centrale **52** de la première roue de ramassage **50** est ajourée de façon à présenter des trous **55** qui débouchent dans la virole. La deuxième roue de ramassage comporte également deux ailes trous **55'** ménagées dans la partie centrale **52'** de la deuxième roue de ramassage **50',** de façon à faciliter la circulation de l'air à l'intérieur du dispositif de ramassage. Comme exposé ci-dessus, le deuxième carter **58** comporte des troisième et quatrième portions **58'a, 58'b,** formant des flasques, qui sont disposées de part et d'autre de la deuxième roue de ramassage **50'.** Les flasques sont perpendiculaires à l'axe de rotation **B1.** Dans cet exemple, la deuxième portion **58b** est reliée à la troisième portion **58'a** par la virole. Toujours dans cet exemple, la deuxième portion **58b,** la virole et la troisième portion **58'a** forment une seule et même pièce. Un intérêt est de faciliter le montage et le démontage du dispositif de ramassage selon l'invention.

Comme exposé précédemment, le bord supérieur **62** s'étend selon un plan de guidage **Q.** La courroie de convoyage d'andain est disposée au-dessus du bord supérieur **62** du premier carter **58** tout en s'étendant sensiblement parallèlement au bord supérieur du premier carter, de sorte que le bord supérieur du premier carter forme une surface de guidage des andains entraînés par la courroie de convoyage.

Avantageusement, la distance axiale **a** entre les première et deuxième portions **58a, 58b** est sensiblement égale ou légèrement supérieure à l'épaisseur axiale de la roue de ramassage, de préférence sensiblement égale ou légèrement supérieure à l'épaisseur axiale **e** de la portion centrale.

## Revendications

1. Dispositif (16) de ramassage pour prélever des andains (N) de tiges végétales (T) déposées au sol (S), ledit dispositif (16) de ramassage comportant :
• au moins une première roue de ramassage (50) ayant un axe de rotation (B1), la première roue de ramassage comportant une partie centrale (52) et des doigts de ramassage (54) qui s'étendent depuis la partie centrale ;
• au moins un premier carter (58) dans lequel est logée la première roue de ramassage (50), la première roue de ramassage étant rotative par rapport au premier carter (58), le premier carter comprenant une extrémité inférieure (60), un bord supérieur (62) et un bord inférieur (64),
la distance (d2) entre l'axe de rotation (B1) et l'extrémité inférieure (60) étant inférieure au rayon (R) de la roue de ramassage de sorte que, en utilisation, certains des doigts de ramassage font saillie au-delà du bord inférieur (64) du premier carter pour prélever les andains,
**caractérisé en ce que** les doigts de ramassage (54) sont fixes par rapport à la partie centrale (52), et
la distance (d1) entre l'axe de rotation (B1) et le bord supérieur (62) est supérieure ou égale au rayon (R) de la première roue de ramassage, de sorte que, en utilisation, certains des doigts de ramassage situés au-dessus d'un plan horizontal (P) passant par l'axe de rotation sont escamotés dans le premier carter en dessous du bord supérieur.

2. Dispositif de ramassage selon la revendication 1, dans lequel le premier carter (58) comporte des première et deuxième portions (58a, 58b) qui sont disposées de part et d'autre de la première roue de ramassage (50), les première et deuxième portions délimitant un logement (59) dans lequel la première roue de ramassage est disposée.

3. Dispositif de ramassage selon la revendication **2,** dans lequel la distance axiale (a) entre les première et deuxième portions (58a, 58b) est sensiblement égale ou légèrement supérieure à l'épaisseur axiale de la roue de ramassage, de préférence sensiblement égale ou légèrement supérieure à l'épaisseur axiale (e) de la portion centrale.

4. Dispositif de ramassage selon l'une quelconque des revendications précédentes, dans lequel le premier carter comporte une ouverture circulaire (69) perpendiculaire à l'axe de rotation.

5. Dispositif de ramassage selon la revendication **4,** dans lequel le diamètre (D2) de la partie centrale (52) est supérieur au diamètre (D1) de l'ouverture circulaire.

6. Dispositif de ramassage selon l'une quelconque des revendications précédentes, dans lequel le premier carter (58) comporte une partie avant (66) qui s'étend entre l'extrémité inférieure (60) du premier carter et le bord supérieur (62) , la partie avant présentant une forme courbe conformée de sorte que la distance (d3) entre l'axe de rotation et la partie avant est une fonction croissante entre l'extrémité inférieure et le bord supérieur, et dans lequel certains des doigts de ramassage font saillie au-delà de la partie avant.

7. Dispositif de ramassage selon l'une quelconque des revendications précédentes, dans lequel le premier carter (58) est conformé de sorte que, lors de la rotation de la première roue de ramassage (50), les doigts de ramassage (54) s'escamotent dans le premier carter lors de leur déplacement entre l'extrémité inférieure (60) et le bord supérieur (62).

8. Dispositif de ramassage selon l'une quelconque des revendications précédentes, comprenant en outre une deuxième roue de ramassage (50'), et un deuxième carter dans lequel est disposée la deuxième roue de ramassage.

9. Dispositif de ramassage selon la revendication **8,** dans lequel les premier et deuxième carters (58, 58') sont reliés l'un à l'autre par une virole (70), qui est préférentiellement coaxiale à l'axe de rotation.

10. Dispositif de ramassage selon les revendications **4** et **9,** dans lequel le deuxième carter (58') comporte une ouverture circulaire (59'), et dans lequel la virole (70) débouche dans les ouvertures (69, 65') des premier et deuxième carters.

11. Dispositif de ramassage selon la revendication **10,** dans lequel la virole présente une paroi cylindrique ajourée (72).

12. Dispositif de ramassage selon la revendication **10** ou **11,** dans lequel la partie centrale (52) de la première roue de ramassage (50) est ajourée de façon à présenter des trous (55) qui débouchent dans la virole.

13. Dispositif de ramassage selon l'une quelconque des revendications **9** à **12,** dans lequel le deuxième carter (58) comprend une troisième (58'a) et une quatrième (58'b) portions disposées de part et d'autre de la deuxième roue de ramassage (50'), dans lequel la deuxième portion (58b) est reliée à la troisième portion (58'a) par la virole.

14. Dispositif de ramassage selon l'une quelconque des revendications précédentes, dans lequel le bord supérieur (62) s'étend selon un plan de guidage (Q).

15. Module (14) de ramassage d'andains comprenant un dispositif (16) de ramassage selon l'une quelconque des revendications précédentes, et au moins une courroie de convoyage (18) d'andains qui est disposée au-dessus du bord supérieur (62) du premier carter (58) tout en s'étendant sensiblement parallèlement au bord supérieur du premier carter, le bord supérieur du premier carter formant une surface de guidage des andains entrainés par la courroie de convoyage.

16. Machine (10) de ramassage d'andains comprenant un module (14) de ramassage d'andains selon la revendication **15,** et un dispositif (12) pour former des balles qui est disposé en aval de la courroie de convoyage (18) d'andains.

## Patentansprüche

1. Aufnahmevorrichtung (16) zum Aufnehmen von Schwaden (N) aus auf dem Boden (S) abgelegten Pflanzenstängeln (T), die Aufnahmevorrichtung (16) umfassend:
• mindestens ein erstes Aufnahmerad (50), das eine Drehachse (B1) aufweist, wobei das erste Aufnahmerad einen mittleren Abschnitt (52) und Aufnahmezinken (54), die sich von dem mittleren Abschnitt erstrecken, umfasst;
• mindestens ein erstes Gehäuse (58), in dem das erste Aufnahmerad (50) gelagert ist, wobei das erste Aufnahmerad in Bezug auf das ersten Gehäuse (58) drehbar ist, wobei das erste Gehäuse ein unteres Ende (60), einen oberen Rand (62) und einen unteren Rand (64) umfasst,
wobei der Abstand (d2) zwischen der Drehachse (B1) und dem unteren Ende (60) kleiner ist als der Radius (R) des Aufnahmerads, sodass im Gebrauch einige der Aufnahmezinken über den unteren Rand (64) des ersten Gehäuses hervorstehen, um die Schwaden aufzunehmen,
**dadurch gekennzeichnet, dass** die Aufnahmezinken (54) in Bezug auf den mittleren Abschnitt (52) feststehend sind, und
der Abstand (d1) zwischen der Drehachse (B1) und dem oberen Rand (62) größer als oder gleich wie der Radius (R) des ersten Aufnahmerads ist, sodass im Gebrauch einige der Aufnahmezinken, die sich oberhalb einer durch die Drehachse verlaufenden horizontalen Ebene (P) befinden, in dem ersten Gehäuse unterhalb des oberen Rands eingefahren sind.

2. Aufnahmevorrichtung nach Anspruch 1, wobei das erste Gehäuse (58) erste und zweite Abschnitte (58a, 58b) umfasst, die auf beiden Seiten des ersten Aufnahmerads (50) angeordnet sind, wobei die ersten und zweiten Abschnitte eine Aufnahmeraum (59) begrenzen, in dem das erste Aufnahmerad angeordnet ist.

3. Aufnahmevorrichtung nach Anspruch 2, wobei der axiale Abstand (a) zwischen den ersten und zweiten Abschnitten (58a, 58b) im Wesentlichen gleich wie oder geringfügig größer ist als die axiale Stärke des Aufnahmerads, vorzugsweise im Wesentlichen gleich wie oder geringfügig größer als die axiale Stärke (e) des mittleren Abschnitts.

4. Aufnahmevorrichtung nach einem der vorherigen Ansprüche, wobei das erste Gehäuse eine kreisförmige Öffnung (69) umfasst, die senkrecht zu der Drehachse angeordnet ist.

5. Aufnahmevorrichtung nach Anspruch 4, wobei der Durchmesser (D2) des mittleren Abschnitts (52) größer ist als der Durchmesser (D1) der kreisförmigen Öffnung.

6. Aufnahmevorrichtung nach einem der vorherigen Ansprüche, wobei das erste Gehäuse (58) einen vorderen Abschnitt (66) umfasst, der sich zwischen dem unteren Ende (60) des ersten Gehäuses und dem oberen Rand (62) erstreckt, der vordere Abschnitt eine gekrümmte Form aufweist, die ausgebildet ist, sodass der Abstand (d3) zwischen der Drehachse und dem vorderen Abschnitt eine zwischen dem unteren Ende und dem oberen Rand zunehmende Funktion ist, und wobei einige der Aufnahmezinken über den vorderen Abschnitt hervorstehen.

7. Aufnahmevorrichtung nach einem der vorherigen Ansprüche, wobei das erste Gehäuse (58) ausgebildet ist, sodass beim Drehen des ersten Aufnahmerads (50) die Aufnahmezinken (54) beim Umlauf zwischen dem unteren Ende (60) und dem oberen Rand (62) in das erste Gehäuse eingefahren werden.

8. Aufnahmevorrichtung nach einem der vorherigen Ansprüche, ferner umfassend ein zweites Aufnahmerad (50') und ein zweites Gehäuse, in dem das zweite Aufnahmerad angeordnet ist.

9. Aufnahmevorrichtung nach Anspruch 8, wobei das erste und das zweite Gehäuse (58, 58') durch eine Hülse (70) miteinander verbunden sind, die vorzugsweise koaxial zu der Drehachse ist.

10. Aufnahmevorrichtung nach den Ansprüchen 4 und 9, wobei das zweite Gehäuse (58') eine kreisförmige Öffnung (59') umfasst und wobei die Hülse (70) in die Öffnungen (69, 65') des ersten und des zweiten Gehäuses mündet.

11. Aufnahmevorrichtung nach Anspruch 10, wobei die Hülse eine durchbrochene zylindrische Wand (72) aufweist.

12. Aufnahmevorrichtung nach Anspruch 10 oder 11, wobei der mittlere Abschnitt (52) des ersten Aufnahmerads (50) durchbrochen ist, sodass Öffnungen (55) vorhanden sind, die in die Hülse münden.

13. Aufnahmevorrichtung nach einem der Ansprüche 9 bis 12, wobei das zweite Gehäuse (58) einen dritten (58'a) und einen vierten (58'b) Abschnitt aufweist, die auf beiden Seiten des zweiten Aufnahmerads (50') angeordnet sind, wobei der zweite Abschnitt (58b) über die Hülse mit dem dritten Abschnitt (58'a) verbunden ist.

14. Aufnahmevorrichtung nach einem der vorherigen Ansprüche, wobei sich der obere Rand (62) entlang einer Führungsebene (Q) erstreckt.

15. Modul (14) zum Aufnehmen von Schwaden, umfassend eine Aufnahmevorrichtung (16) nach einem der vorherigen Ansprüche und mindestens einen Förderriemen (18) für Schwaden, der oberhalb des oberen Rands (62) des ersten Gehäuses (58) angeordnet ist und sich im Wesentlichen parallel zu dem oberen Rand des ersten Gehäuses erstreckt, wobei der obere Rand des ersten Gehäuses eine Führungsfläche für die durch den Förderriemen bewegten Schwaden bildet.

16. Maschine (10) zum Aufnehmen von Schwaden, umfassend ein Modul (14) zum Aufnehmen von Schwaden nach Anspruch 15 und eine Vorrichtung (12) zum Bilden von Ballen, die stromabwärts von dem Förderriemen (18) für Schwaden angeordnet ist.

## Claims

1. Pickup device (16) for collecting windrows (N) of plant stems (T) deposited on the ground (S), said pickup device (16) comprising:
• at least one first pickup wheel (50) having an axis of rotation (B1), the first pickup wheel including a central part (52) and pickup fingers (54) which extend from the central part;
• at least one first casing (58) wherein the first pickup wheel (50) is housed, the first pickup wheel being rotatable relative to the first casing (58), the first casing comprising a lower end (60), an upper edge (62), and a lower edge (64),
the distance (d2) between the axis of rotation (B1) and the lower end (60) being less than the radius (R) of the pickup wheel so that, in use, some of the pickup fingers project beyond the lower edge (64) of the first casing to collect the windrows,
**characterized in that** the pickup fingers (54) are fixed relative to the central part (52), and
the distance (d1) between the axis of rotation (B1) and the upper edge (62) is greater than or equal to the radius (R) of the first pickup wheel, so that, in use, some of the pickup fingers located above a horizontal plane (P) passing through the axis of rotation are retracted in the first casing below the upper edge.

2. The pickup device according to claim 1, wherein the first casing (58) includes first and second portions (58a, 58b) which are arranged on either side of the first pickup wheel (50), the first and second portions delimiting a housing (59) in which the first pickup wheel is arranged.

3. The pickup device according to claim 2, wherein the axial distance (a) between the first and second portions (58a, 58b) is substantially equal to or slightly greater than the axial thickness of the pickup wheel, preferably substantially equal to or slightly greater than the axial thickness (e) of the central part.

4. The pickup device according to any one of the preceding claims, wherein the first casing includes a circular opening (69) perpendicular to the axis of rotation.

5. The pickup device according to claim 4, wherein the diameter (D2) of the central part (52) is greater than the diameter (D1) of the circular opening.

6. The pickup device according to any one of the preceding claims, wherein the first casing (58) includes a front part (66) which extends between the lower end (60) of the first casing and the upper edge (62), the front part presenting a curved shape configured so that the distance (d3) between the axis of rotation and the front part is an increasing function between the lower end and the upper edge, and wherein some of the pickup fingers project beyond the front part.

7. The pickup device according to any one of the preceding claims, wherein the first casing (58) is configured so that, during rotation of the first pickup wheel (50), the pickup fingers (54) are retracted into the first casing during their displacement between the lower end (60) and the upper edge (62).

8. The pickup device according to any one of the preceding claims, further comprising a second pickup wheel (50') and a second casing wherein the second pickup wheel is arranged.

9. The pickup device according to claim 8, wherein the first and second casings (58, 58') are connected to each other by a sleeve (70), which is preferably coaxial with the rotation axis.

10. The pickup device according to claims 4 and 9, wherein the second casing (58') includes a circular opening (59'), and wherein the sleeve (70) opens into the openings (69, 65') of the first and second casings.

11. The pickup device according to claim 10, wherein the sleeve presents a perforated cylindrical wall (72).

12. The pickup device according to claim 10 or 11, wherein the central part (52) of the first pickup wheel (50) is perforated in such a way as to present holes (55) which open into the sleeve.

13. The pickup device according to any one of claims 9 to 12, wherein the second casing (58) comprises a third (58'a) and a fourth (58'b) portion arranged on either side of the second pickup wheel (50'), wherein the second portion (58b) is connected to the third portion (58'a) by the sleeve.

14. The pickup device according to any one of the preceding claims, wherein the upper edge (62) extends according to a guide plane (Q).

15. Windrow pickup module (14) comprising a pickup device (16) according to any one of the preceding claims, and at least one windrow conveyor belt (18) which is arranged above the upper edge (62) of the first casing (58) while extending substantially parallel to the upper edge of the first casing, the upper edge of the first casing forming a guiding surface for the windrows driven by the conveyor belt.

16. The windrow pickup machine (10) comprising a windrow pickup module (14) according to claim 15, and a device (12) for forming bales which is arranged downstream of the windrow conveyor belt (18).
